(19) Europäisches Patentamt
European Patent Office
Office européen des brevets

(11) **EP 1 026 632 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(51) Int Cl.:
*G01V 8/10* [(2006.01)] *G06T 7/20* [(2006.01)]

(21) Anmeldenummer: **00108866.5**

(22) Anmeldetag: **11.08.1995**

(54) **System und Verfahren zur Bildauswertung**

image-evaluation system and method

SYSTEME ET PROCEDE D'EVALUATION D'IMAGE

(84) Benannte Vertragsstaaten:
**AT BE CH DE DK ES FR GB GR IE IT LI LU MC NL PT SE**

(30) Priorität: **24.08.1994 DE 4430016**

(43) Veröffentlichungstag der Anmeldung:
**09.08.2000 Patentblatt 2000/32**

(62) Dokumentnummer(n) der früheren Anmeldung(en) nach Art. 76 EPÜ:
**95929852.2 / 0 777 864**

(73) Patentinhaber: **Seisma AG**
**6300 Zug (CH)**

(72) Erfinder: **Dornier, Claudio**
**6312 Steinhausen (CH)**

(74) Vertreter: **Grünecker, Kinkeldey,**
**Stockmair & Schwanhäusser**
**Anwaltssozietät**
**Leopoldstrasse 4**
**80802 München (DE)**

(56) Entgegenhaltungen:
**EP-A- 0 410 826      EP-A- 0 622 690**
**DE-A- 4 332 753      FR-A- 2 538 653**
**US-A- 4 249 207      US-A- 5 099 322**
**US-A- 5 099 324**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf ein System und ein Verfahren zur Bildauswertung nach der Patentanmeldung P 44 07 528.6, die am 21.09.95 nachveröffentlicht wurde.

Gemäß dem in vorstehend genannter Patentanmeldung erwähnten Stand der Technik, wie er beispielsweise in der DE-PS 36 28 816 offenbart ist, wird ein von eines Videosensor geliefertes Videosignal abgetastet und eine vorbestimmte Anzahl von Abtastwerten, die einem Teilfeld des Videobilds entsprechen, wird als Summenwert zusammengefaßt und anschließend gespeichert.

Durch Vergleich der Summenwerte der Teilfelder eines aktuellen Videobildes mit denjenigen eines gespeicherten, vorhergehenden Videobildes ist eine Änderung des Bildinhalts aufgrund einer Bewegung innerhalb des Bildausschnitts feststellbar.

Zur Auswertung einer festgestellten Bildänderung werden die sich ändernden Teilfelder einer Überprüfung auf bestimmte Alarmrelevanz-Kriterien unterzogen. Bei Erfüllung vorbestimmter Kriterien wie beispielsweise Überschreitung einer bestimmten Mindest-Objektgröße (z.B. 6 zusammenhängende Teilfelder) wird ein Alarm ausgelöst.

Ferner können auch sogenannte Referenzfelder vorprogrammiert werden, die selbst keinen Alarm auslösen, die jedoch bei einer alarmrelevanten Änderung ihres Bildinhalts das System in eine höhere Alarmfeldebene versetzen bzw. weitere sogenannte Alarmfelder aktivieren. Dabei können verschiedenen Alarmfeldern unterschiedliche Alarmfeldebenen zugewiesen werden, wobei nur die Alarmfelder zu einer Alarmauslösung führen, die der vorherrschenden Alarmfeldebene zugeordnet sind.

Eine Bildänderung muß demnach zuerst in einem Referenzfeld (Voralarmzone) auftreten, bevor eine alarmrelevante Änderung in einem Alarmfeld einer höheren Alarmfeldebene zur Auslösung eines Alarms führt. Die Referenzfelder dienen also lediglich als Umschaltfelder oder zur logischen Verknüpfung.

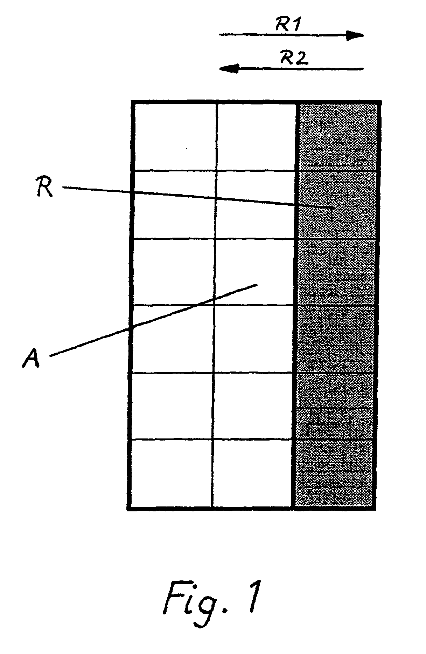

Fig. 1 zeigt ein vereinfachtes Teilfeldraster aus 18 Teilfeldern, bei dem die rechte Spalte aus sechs Referenzfeldern R besteht, die bei alarmrelevanter Änderung zu einer Umschaltung in eine zweite Alarmfeldebene führen, und die linke und mittlere Spalte aus jeweils sechs Alarmfeldern A bestehen, denen die zweite Alarmfeldebene zugeordnet ist.

Bewegt sich eine alarmrelevante Bildänderung in Richtung R2, so wird zunächst ein Referenzfeld R aktiviert, wodurch eine Umschaltung in die zweit. Alarmfeldebene und damit eine Aktivierung der Alarmfelder A erfolgt. Eine nachfolgende alarmrelevante Änderung innerhalb der Alarmfelder A führt somit zu einer Alarmauslösung.

Eine Bewegung einer alarmrelevanten Änderung in Richtung R1 hingegen führt bei Erreichen der Alarmfelder A zu keiner Alarmierung, da im Ausgangszustand die erste Alarmfeldebene vorherrscht.

Durch einen solchen Aufbau ist also eine von der Zonenfolge der Bildänderung abhängige Alarmierung möglich.

Der in Fig. 1 gezeigte Referenzfeldbereich kann beispielsweise den Bereich einer Umzäunung abdecken und der Alarmfeldbereich ein zu schützendes Gelände.

Ein Einbrecher, der sich von einer Position außerhalb des zu schützenden Geländes, d.h. in Richtung R2, dem Alarmfeldbereich nähert, betritt zunächst den Referenzfeldbereich und aktiviert somit die Alarmfelder. Sobald er daraufhin den Alarmfeldbereich betritt, wird Alarm ausgelöst.

Ein Wachmann hingegen, der sich ausschließlich innerhalb des zu schützenden Geländes und damit nicht im Referenzfeldbereich bewegt, führt nicht zu einer Aktivierung der Alarmfelder A. Eine durch ihn hervorgerufene Änderung im Alarmfeldbereich führt demnach zu keiner Alarmauslösung.

Dies gilt jedoch nur, wenn zuvor keine relevante Bildänderung im Referenzfeldbereich aufgetreten ist.

Bei einer derartigen Auswertung ist die Feststellung eines örtlichen oder zeitlichen Zusammenhangs einer Bildänderung rein zufällig, da eine Zuordnung der Bildänderungen nicht möglich ist. Beispielsweise kann eine witterungsbedingte Bildänderung, die z.B. durch Mastwackeln, Laubaufwirbeln oder Schlagschattenbildung hervorgerufen wird, zu einer andauernden Aktivierung der Referenzfelder führen, wodurch das Bildauswertesystem ständig in die zweite Alarmfeldebene versetzt wird und somit die Alarmfelder A aktiviert sind.

Eine durch den Wachmann verursachte Bildänderung würde in diesem Fall zu einer Alarmauslösung führen.

Desweiteren kann eine, in einem Alarmfeld der zweiten Alarmfeldebene auftretende, witterungsbedingte Bildänderung, die in keinem Zusammenhang mit einer zuvor in einem Referenzfeld aufgetreten, tatsächlich alarmrelevanten Bildänderung steht, zu einer Alarmauslösung führen.

Bei den herkömmlichen Verfahren und Systemen zur Bildauswertung ist daher eine zonenabhängige Auswertung der Bildänderungen häufig fehlerhaft und damit unzuverlässig.

US 4 249 207 offenbart ein System und ein Verfahren zur Bildauswertung, bei denen ein vorbestimmter Überwachungsbereich in eine Vielzahl von Zellen aufgeteilt wird und die Veränderung eines integrierten Videosignals einer jeden Zelle überwacht wird. Als Kriterium für eine Meldungsauslösung wird die Anzahl von benachbarten, sich ändernden Zellen in einer bestimmten Richtung ausgewertet. Somit wird ein Alarm dann ausgegeben, wenn eine detektierte Person mehr als eine vorher festgelegte Distanz auf dem Videobild in eine Richtung zurücklegt.

Der Erfindung liegt daher die Aufgabe zugrunde, ein System und Verfahren zur Bildauswertung zu schaffen, mittels dem eine zuverlässige zonenabhängige Auswertung ermöglicht wird.

Diese Aufgabe wird erfindungsgemäß gelöst durch ein Bildauswertesystem gemäß Anspruch 1.

Ferner wird die Aufgabe gelöst durch ein Verfahren zur Bildauswertung gemäß Anspruch 19.

Durch die objektbezogene Auswertung der Zonenwechsel und der Melderelevanz der betreffenden Bildzonen kann die Zuverlässigkeit der Bildauswertung beträchtlich erhöht werden.

Vorteilhafte Ausgestaltungen der Erfindung sind in den Unteransprüchen aufgeführt.

Die Erfindung wird nachstehend anhand eines Ausführungsbeispiels unter Bezugnahme auf die Zeichnung näher beschrieben. Es zeigen:

Fig. 1 ein Teilfeldraster eines herkömmlichen Systems zur Bildauswertung,

Fig. 2 ein Blockschaltbild eines Systems zur Bildauswertung gemäß einem Ausführungsbeispiel,

Fig. 3 einen Überwachungsbildausschnitt des Systems zur Bildauswertung nach dem Ausführungsbeispiel.

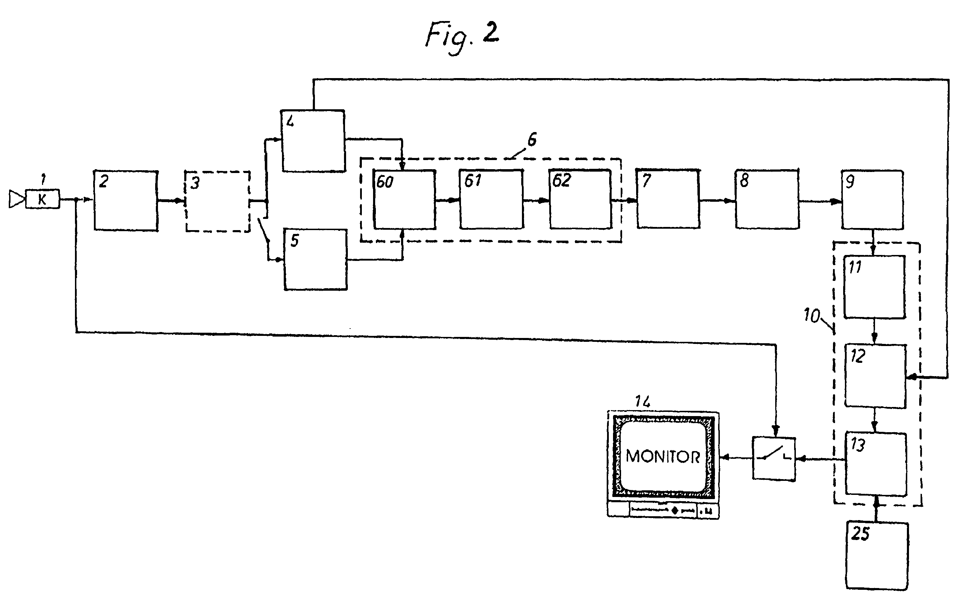

Das in Fig. 2 dargestellte Blockschaltbild zeigt ein Ausführungsbeispiel eines Systems zur Bildauswertung.

Das von einer Kamera 1 gelieferte Videosignal wird mittels eines Analog/Digital-Wandlers 2 digitalisiert. Die Kamera 1 kann eine übliche Videoüberwachungskamera aber auch eine Infrarotoder Wärmebildkamera zur Erzeugung des Videosignals sein. Die digitalisierten Bildpunktdaten können wahlweise zur Reduktion der Datenmenge durch eine Reduzierstufe 3, wie z.B. in der DE-PS 36 28 816 näher beschrieben, durch gruppenweises Addieren einzelner Bildpunktdaten zu neuen Bildpunktdaten zusammengefaßt werden oder direkt in einem ersten Bildspeicher 4 (LIVE-Speicher) gespeichert werden.

In periodischen Abständen wird das reduzierte oder in voller Auflösung digitalisierte Bild in einem zweiten Bildspeicher 5 (REFERENZ-Speicher) gespeichert.

Eine Differenzbild-Erzeugungseinrichtung 6, die durch einen Signalprozessor oder eine festverdrahtete Rechenschaltung realisierbar ist, bildet für jedes neue Bild den Differenzbetrag zwischen einander entsprechenden, ggf. reduzierten Bildpunktdaten des "LIVE-Bilds" und des "REFERENZ-Bilds". Die Differenzbild-Erzeugungseinrichtung 6 umfaßt einen Subtraktionsteil 60, einen Betragsbildungsteil 61 sowie einen Schwellwertvergleicherteil 62. Die Differenz der Bildpunktdaten eines bestimmten Bildpunktes wird nach der Betragsbildung mit einem Schwellwert verglichen, der die Entscheidungsschwelle für eine Bildpunktänderung darstellt. Durch diese "Empfindlichkeitsschwelle" werden durch Signalrauschen hervorgerufene Änderungen eliminiert.

Bei überschreiten des Schwellwerts wird ein Binärwert "1" und bei Unterschreiten des Schwellwerts ein Binärwert "0" in einen Binärbildspeicher 7 eingeschrieben. Die Bildpunkte mit dem Binärwert "1" stellen also markierte Bildpunkte dar, bei denen eine Bildveränderung festgestellt wurde.

Nachfolgend wird das so gebildete Binärbild mittels eines Objektextraktors 8, der beispielsweise durch einen Mikroprozessor realisierbar ist, auf zusammenhängende markierte Bildpunkte untersucht, wobei alle zusammenhängenden Bildpunkte einem sogenannten Objekt zugeordnet werden. Demgemäß entspricht ein Objekt einem zusammenhängenden Bildbereich, der sich innerhalb eines bestimmten, von dem Speicherzyklus des zweiten Bildspeichers abhängigen Zeitraums geändert hat. In einer Objektliste werden Objektdaten der extrahierten Objekte wie bespielsweise Erfassungskoordinaten, Abmessungen etc. gespeichert. Die Objekte verden beispielsweise als ein die maximale horizontale und vertikale Ausdehnung des markierten Bildpunktbereichs umschreibendes Rechteck odgl. definiert.

Im weiteren Verlauf der Verarbeitung verden nicht mehr einzelne Bildpunkte sondern lediglich die extrahierten Objekte verwendet, wodurch sich die Verarbeitungsgeschwindigkeit beträchtlich erhöht.

Die aktuelle Objektliste wird mit einer gespeicherten Objektliste des vorhergehenden Bildes mittels eines ebenfalls durch einen Mikroprozessor realisierbaren Objektkorrelators 9 verglichen und aktualisiert. Dabei werden die aus dem aktuellen Binärbild extrahierten Objekte den in dem vorhergehenden Bild gefundenen Objekten durch Plausibilitätsprüfung, wie z.B. Prüfung auf minimale Entfernung, ähnliche Form odgl. zugeordnet. Nicht zuordenbare Objekte werden als neue Objekte gespeichert und Objekte, denen über eine bestimmte Zeitdauer kein Objekt zugeordnet wurde, werden wieder gelöscht.

In folgenden wird die Auswertung der Objektdaten mit dem Ziel der Erfassung alarmrelevanter Objekte und anschließender Alarmauslösung beschrieben. Dies geschieht in einer Auswertungseinrichtung 10.

Eine Objektverfolgungseinheit 11 berechnet einen Vektor, der sich aus dem Unterschied des Erfassungspunktes, nämlich des Mittelpunktes eines neuen Objekts, und dem gespeicherten Mittelpunkt M(x;y) des zugeordneten korrelierten Objekts des vorangegangenen Bilds ergibt. Aus dem berechneten Vektor werden eine zurückgelegte Strecke s als Betrag des Vektors, eine horizontale und vertikale Richtungskomponente $R_H$ bzw. $R_V$ sowie eine mittlere Geschwindigkeit v unter Ansetzen der bisherigen Bestanddauer T des betreffenden Objekts ermittelt.

Nach Auswertung der neuen Objektdaten durch die Objektverfolgungseinheit 11 wird die aktualisierte Objektliste durch die ermittelten Werte für den Betrag des Bewegungsvektors s, die mittlere Geschwindigkeit v, die bisherige Bestanddauer T und die Bewegungsrichtungskomponenten $R_H$ und $R_V$ ergänzt.

Ein Objekt weist beispielsweise einen aktuellen Erfassungsmittelpunkt (2;0) auf. Der zuletzt gespeicherte Mittelpunkt hat die Koordinaten (3,5;1,5). Daraus ergibt sich gemäß dem Satz des Pythagoras eine Wegstrecke zu:

$$s = ((x_n - x_{n-1})^2 + (y_n - y_{n-1})^2)^{0,5}$$
$$= (1,5^2 + 1,5^2)^{0,5}$$
$$= 2,1.$$

Für die Richtungskoordinaten ergeben sich die Werte:

$$R_H = x_n - x_{n-1} = -1,5$$
$$R_V = y_n - y_{n-1} = -1,5.$$

Wird eine bisherige Bestanddauer T = 2 des Objekts angenommen, so ergibt sich eine mittlere Geschwindigkeit von:

$$v = s/T = 1,05.$$

Eine nachfolgende, wiederum mittels Mikroprozessor realisierbare Merkmalsextraktionseinheit 12 liest die Bilddaten im Bereich der alarmrelevanten Objektrechtecke aus dem ersten Bildspeicher 4 aus und extrahiert in diesem Bildausschnitt nach bekannten Bildverarbeitungsverfahren Bildinhaltsmerkmale für das Objekt. Diese Merkmalsextraktion geschieht allerdings nur für alarmrelevante Objekte, d.h. für Objekte, die eine vorbestimmte Richtung, Größe, Geschwindigkeit usw. aufweisen. Dabei wird zur Bestimmung der Objektgröße die Größe des extrahierten Rechtecks sowie die innerhalb des Rechtecks gefundene Anzahl markierter Bildpunkte herangezogen.

Bei der anschließenden objektbezogenen Bildverarbeitung können auch einfache Merkmale wie beispielsweise die Farbe des Objekts extrahiert werden.

In einer Meldeobjektprüfüngseinheit 13 werden schließlich alle Merkmale der extrahierten und verfolgten Objekte mit einer vorbestimmten Liste erforderlicher Merkmalskriterien vergli-. chen und nur bei gleichzeitiger Erfüllung aller Kriterien wird ein Alarm ausgelöst und das Videosignal auf einen Monitor 14 geschaltet, wobei die Alarmobjekte mit den zugehörigen Vektoren eingeblendet werden.

Im folgenden wird eine zonenabhängige Auswertung der Merkmale der extrahierten Objekte anhand eines Ausführungsbeispiels näher erläutert.

Durch die ständige Objektkorrelation und anschließende Merkmalsextraktion nach Größe, Form, Geschwindigkeit etc. ist eine selektive, objektbezogene Zonenauswertung möglich.

Die auf die Richtung des Objekts bezogenen Merkmalskriterien zur Alarmauslösung werden anhand von vorprogrammierbaren Bildzonen, die mittels einer üblichen Eingabevorrichtung 25 wie beispielsweise einer Tastatur, einer Maus oder einem Lichtgriffel am Monitor 14 markierbar sind, definiert.

Die Festlegung der Bildzonen geschieht beispielsweise durch Eingabe der Eckkoordinaten eines die Bildzone umschreibenden Polygonzuges, die in der Meldeobjektprüfunqseinheit 13 gespeichert und zur Merkmalsauswertung herangezogen werden.

Zur Vereinfachung der Kontrolle können die auf diese Weise markierten Bildzonen durch bestimmte Farben am Monitor 14 hervorgehoben werden.

Im vorliegenden Ausführunqsbeispiel sind drei Bildzonen mit unterschiedlichen logischen Auswertungskriterien markierbar. Tab. 1 zeigt eine mögliche Bezeichnung und Farbenzuordnung der Bereiche.

Tab.1

| BEREICH | FARBE | BEZEICHNUNG |
|---------|-------|-------------|
| A | grün | Erfassungszone |
| B | gelb | Alarmzone |
| C | rot | Prioritätszone |

Für jedes extrahierte Objekt wird anhand der zugehörigen Koordinaten in der Objektliste festgestellt, in welchem Bereich es sich augenblicklich befindet. Außerhalb der drei markierten Bereiche findet keine Objektverfolgung bzw. Auswertung statt.

Die drei Bildzonen werden in der Meldeobjektprüfungseinheit 13 zur Auswertung folgender Alarmrelevanz-Kriterien herangezogen:

- in der Erfassungazone A wird kein Alarm ausgelöst, unabhängig aus welcher Richtung ein Objekt in die Zone eintritt;

- bleibt ein Objekt innerhalb der Alarmzone B wird ebenfalls kein Alarm ausgelöst;

- dringt ein Objekt in die Prioritätszone C ein, so wird immer ein Alarm ausgelöst;

- bei Überschreitung der einzelnen Zonen gelten für die Beurteilung der Alarmrelevanz ferner die in Tab. 2 dargestellten logischen Zusammenhänge;

- ein Alarm wird nur dann ausgelöst, wenn alle übrigen Alarmrelevanz-Kriterien (betreffend z.B. Größe, Geschwindigkeit etc.) erfüllt sind.

Tab. 2

| VON | NACH | ALARM |
|-----|------|-------|
| A | A | nein |
| A | B | ja |
| A | C | ja |
| B | B | nein |
| B | A | nein |
| B | C | ja |
| C | C | ja |
| C | B | ja |
| C | A | nein |

Ein Objekt wird beispielsweise in der Erfassungszone A erkannt und in der Objektliste gespeichert. Bewegt sich nun dieses Objekt in der Weise, daß alle Alarmrelevanz-Kriterien erfüllt sind, so wird solange kein Alarm ausgelöst, bis das Objekt mit seinem Objektmittelpunkt, auf den sich die gespeicherten Objektkoordinaten beziehen, die Alarmzone B erreicht hat.

Bewegt sich ferner ein Objekt (z.B. ein Vogel), dessen Geschwindigkeit sich jedoch außerhalb des als Alarmrelevanz-Kriterium eingestellten Geschwindigkeitsbereiches befindet, von der Alarmzone B in die Prioritätszone C, so wird kein Alarm ausgelöst.

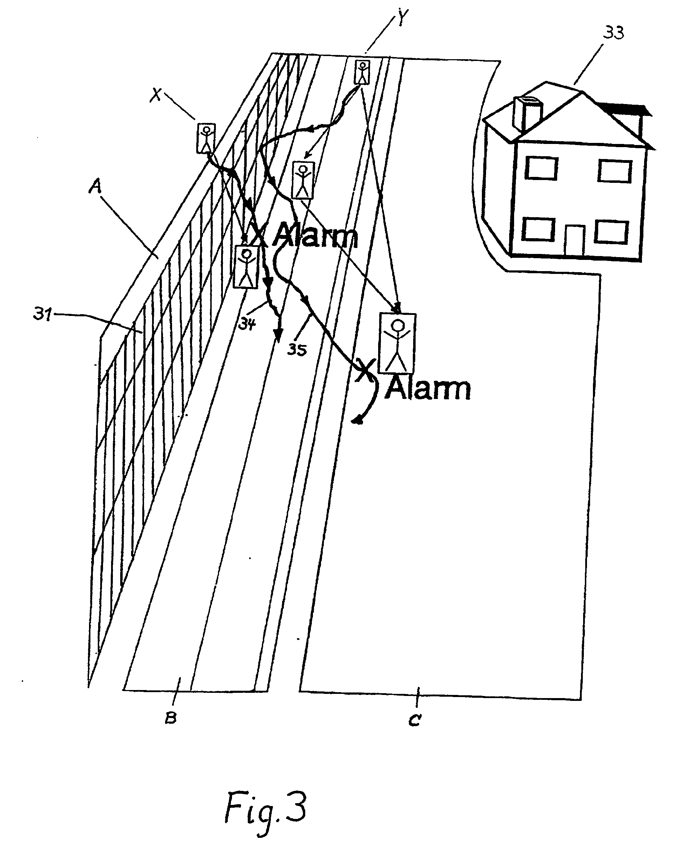

Fig. 3 zeigt einen von der Überwachungskamera 1 erfaßten und am Monitor 14 sichtbaren Bildauschnitt, in dem die drei Bildzonen A, B und C gekennzeichnet sind. Ferner sind in dem Bildauschnitt eine Umzäunung 31, ein Weg 32 und ein Gebäude 33 erkennbar, wobei die Bildzonen derart programmiert wurden, daß eine Erfassungszone A im Bereich der Umzäunung 31, eine Alarmzone B im Bereich des Weges 32 und eine Prioritätszone C im Bereich des Gebäudes 33 und des zu sichernden Geländes angeordnet sind.

Weiterhin sind unterschiedliche bewegte Objekte durch die entsprechenden Extraktionsrechtecke X, Y und deren Bewegungsverläufe 34, 35 dargestellt, anhand derer die Auswertungskriterien nachfolgend näher beschrieben werden.

Ein bewegtes Objekt X, das einen potentiellen Einbrecher darstellt, wird beispielsweise in der Erfassungazone A erfaßt. Wird zum gleichen Zeitpunkt in der Alarmzone B Laub aufgewirbelt, so erfolgt keine Alarmauslösung, da die Laubänderung, selbst wenn sie alarmrelevant wäre, aufgrund ihrer Form und Position im Objektkorrelator 9 als neues Objekt eingestuft wird. Sobald jedoch das Objekt X gemäß dem Bewegungsverlauf 34 mit seinem Mittelpunkt die Alarmtone B erreicht erfolgt eine Alarmierung.

Andererseits kann sich ein einen Wachmann darstellendes Objekt Y gemäß dem Bewegungsverlauf 35 innerhalb der Alarmzone B bewegen, ohne einen Alarm auszulösen. Das Objekt Y ist nämlich in der Alarmzone B erfaßt worden, ohne zuvor die Erfassunqszone A betreten zu haben.

Da die Prioritätszone C mit keiner der anderen Zonen verknüpft ist, wird bei deren Betreten durch das Objekt Y in jedem Falle Alarm ausgelöst.

Durch Einführung zusätzlicher Alarmrelevanz-Kriterien ist sogar ein Mehrfach-Zonenwechsel erfaßbar. Hierzu wird beispielsweise anhand der ebenfalls in der Objektliste gespeicherten Koordinaten des erstmaligen Erfassungspunktes des Objekts festgestellt, in welcher Bildzone das Objekt zuerst erfaßt wurde.

Beispielsweise wird der in Fig. 3 dargestellte Wechsel des Objekts Y von der Alarmzone B in die Erfassungszone A und wieder zurück dadurch ermöglicht, daß eine Alarmauslösung dann verhindert wird, wenn sich die Koordinaten des erstmaligen Erfassungspunktes in der Alarmzne B befinden.

Zur Auswertung von Mehrfachwechseln kann dementsprechend die Tab. 2 durch eine zusätzliche Spalte für die Bildzone, in der sich die Koordinaten des ersten Erfassungspunktes befinden, ergänzt werden.

Es werden ein System und ein Verfahren zur Bildauswertung offenbart, gemäß denen ein aus einem digitalisierten Videosignal einer Überwachungskamera 1 gewonnenes Differenzbild, in dem sich ändernde Bildpunkte markiert sind, mittels eines Objektextraktors 8 auf zusammenhängende Bildpunkte (Objekte) untersucht wird. Die extrahierten Objekte werden gespeicherten Objekten eines vorangegangenes Bildes zugeordnet. Durch Auswertung bestimmter Relevanz-Kriterien, die von der Veränderung der Objektposition in Bezug auf vorbestimmbare Bildzonen A, B, C unterschiedlicher Melderelevanz abhängig sind, erfolgt eine zonenabhängige Meldungsebgabe.

**Patentansprüche**

1. Bildauswertesystem zum Auswerten von einem zu überwachenden und in Bildzonen (A,B,C) mit unterschiedlicher vorbestimmter Melderelevanz unterteilten Bildbereich entsprechenden Bilddaten mit:

    einer Auswertungseinrichtung (10) zum Abgeben einer Meldung bei Erfassung einer Veränderung der Position eines Objekts in dem zu überwachenden Bildbereich, wobei die Auswertungseinrichtung geeignet ist die Meldung in Abhängigkeit der Meierelevanz der Objektbildzone vor der Positionsveränderung und der Melderelevanz der Objektbildzone nach der Positionsveränderung abzugeben.

2. Bildauswertesystem nach Anspruch 1, ferner **gekennzeichnet durch** einen Referenzbildspeicher zum Speichern der Bilddaten eines Bildes als die Referenzbilddaten und einer Differenzbild-Erzeugungseinrichtung zum Vergleichen von aktuellen Bilddaten mit Referenzbilddaten und zum Erzeugen eines Differenzbildes, in dem Bildpunkte markiert sind, deren Bilddaten sich geändert haben.

3. Bildauswertesystem nach Anspruch 2, ferner **gekennzeichnet durch** eine Objektextraktionseinrichtung (8) zum Zusammenfassen von zusammenhängenden markierten Differenzbildpunkten zu Objekten und zum Erstellen einer Objektliste mit die extrahierten Objekte beschreibenden Objektdaten.

4. System nach einem der Ansprüche 1 bis 3, **gekennzeichnet durch** eine Eingabevorrichtung (25) mittels der die Bildzonen (A, B, C) vorbestimmbar sind.

5. System nach Anspruch 4, **dadurch gekennzeichnet, dass** die Bildzonen (A, B, C) anhand eines die entsprechende Bildzone umschreibenden Polygonzuges definierbar sind, wobei mittels der Eingabevorrichtung (25) die Koordinaten des Polygonzuges eingebbar sind.

6. System nach einem der vorstehenden Ansprüche, **dadurch gekennzeichnet, dass** die Bildzonen (A, B, C) eine Erfassungszone (A), eine Alarmzone (B) und eine Prioritätszone (C) umfassen.

7. System nach Anspruch 6, **dadurch gekennzeichnet, dass** zur Erhöhung der Erfassbarkeit bei einer Anzeige des zu überwachenden Bildbereichs an einer Anzeigevorrichtung (14) die Erfassungszone (A) in grüner Farbe, die Alarmzone (B) in gelber Farbe und die Prioritätszone (C) in roter Farbe darstellbar sind.

8. System nach Anspruch 6, **dadurch gekennzeichnet, dass** die Auswertungseinrichtung (10) bei einer Veränderung der Objektposition innerhalb der Erfassungszone (A) keine Meldung abgibt.

9. System nach Anspruch 6, **dadurch gekennzeichnet, dass** die Auswertungseinrichtung (10) bei einer Veränderung der Objektposition von der Erfassungszone (A) in die Alarmzone (B) eine Meldung abgibt.

**10.** System nach Anspruch 6, **dadurch gekennzeichnet, dass** die Auswertungseinrichtung (10) bei einer Veränderung der Objektposition in die Prioritätszone (C) eine Meldung abgibt.

**11.** System nach Anspruch 6, **dadurch gekennzeichnet, dass** die Auswertungseinrichtung (10) bei einer Meldungsabgabe die Veränderung der Objektposition in Bezug auf die unterschiedlichen Bildzonen (A, B, C) gemäß nachstehender Tabelle berücksichtigt, wobei A die Erfassungszone, B die Alarmzone und C die Prioritätszone kennzeichnet:

| VON | NACH | MELDUNGSABGABE |
| --- | --- | --- |
| A | A | nein |
| A | B | ja |
| A | C | ja |
| B | B | nein |
| B | A | nein |
| B | C | ja |
| C | C | ja |
| C | B | ja |
| C | A | nein |

**12.** System nach einem der Ansprüche 8 bis 11, **dadurch gekennzeichnet, dass** die Meldungsabgabe durch die Auswertungseinrichtung (10) nur dann erfolgt, wenn auch alle übrigen vorbestimmten Relevanz-Kriterien erfüllt sind.

**13.** System nach einem der Ansprüche 8 bis 12, **dadurch gekennzeichnet, dass** die Auswertungseinrichtung (10) anhand der in einer Objektliste gespeicherten Koordinaten des erstmaligen Erfassungspunktes eines Objekts einen Mehrfach-Bildzonenwechsel feststellt.

**14.** System nach Anspruch 13, **dadurch gekennzeichnet, dass** die Auswertungseinrichtung (10) bei einer Veränderung der Objektposition von der Erfassungszone (A) in die Alarmzone (B) keine Meldung abgibt, wenn sich die Koordinaten des erstmaligen Erfassungspunktes des Objekts in der Alarmzone (B) befinden.

**15.** System nach einem der vorstehenden Ansprüche, **dadurch gekennzeichnet, dass** die Auswertungseinrichtung (10) eine Meldeobjektprüfungseinheit (13) umfasst, in der die Koordinaten der vorbestimmten Bildzonen (A, B, C) gespeichert sind, wobei die Meldeobjektprüfungseinheit (13) die Veränderung der Objektposition anhand der Objektkoordinaten eines in einem Objektextraktor (8) aus dem Differenzbild extrahierten Objekts und der gespeicherten Objektkoordinaten eines in einem Objektkorrelator (9) zugeordneten gespeicherten Objekts ermittelt.

**16.** System nach einem der vorstehenden Ansprüche, **dadurch gekennzeichnet, dass** die Auswertungseinrichtung (10) eine Meldung bei vorbestimmten relevanten Merkmalen der geänderten Bilddaten abgibt, wobei die Auswertungseinrichtung (10) derart voreinstellbar ist, dass die als Kriterium für die Relevanz verwendete Objektgröße bei in voreingestellten Bildausschnitten befindlichen Objekten ohne Berücksichtigung der perspektivischen Größenänderung ausgewertet wird.

**17.** System nach einem der vorstehenden Ansprüche, **dadurch gekennzeichnet, dass** es eine Vorauswertungseinrichtung (22) umfasst, die die Programmierung einer zur Meldungsabgabe bei vorbestimmten relevanten Merkmalen der geänderten Bilddaten verwendeten Auswertungseinrichtung (10) in Abhängigkeit vorbestimmter, von den Umweltbedingungen im Bildbereich abhängiger Merkmale verändert.

**18.** System nach einem der vorstehenden Ansprüche, **gekennzeichnet durch**

a) eine Konturschaltung (15) zur Erzeugung eines Konturbildes aus den Bilddaten,
b) einen nichtflüchtigen Speicher (17), in den Daten von Referenzkonturabschnitten (K1, K2) markanter, nicht veränderlicher Bildausschnitte eingespeichert werden, und

c) eine Vergleichseinrichtung (16) zum Vergleichen der Daten der gespeicherten Referenzkonturabschnitte (K1, K2) mit den Bilddaten und zum Erzeugen eines Warnsignals (20) bei fehlender Übereinstimmung.

19. Verfahren zum Auswerten von einem zu überwachenden und in Bildzonen (A,B,C) mit unterschiedlicher vorbestimmter Melderelevanz unterteilten Bildbereich entsprechenden Bilddaten, mit dem Schritt:

Abgeben einer Meldung bei Erfassung einer Veränderung der Position eines Objekts in dem zu überwachenden Bildbereich wobei die Meldung in Abhängigkeit der Melderelevanz der Objektbildzone vor der Positionsveränderung und der Melderelevanz der Objektbildzone nach der Positionsveränderung abgegeben wird.

20. Verfahren nach Anspruch 16, **gekennzeichnet durch** die weiteren Schritte:

Unterteilen eines zu überwachenden Bildbereichs in Bildzonen mit unterschiedlicher vorbestimmter Melderelevanz;
Speichern von dem zu überwachenden Bildbereich entsprechenden Bilddaten als Referenzbilddaten; .
Erzeugen eines Differenzbilds **durch** Markierung derjenigen Bildpunkte, deren Bilddaten sich geändert haben.

21. Verfahren nach Anspruch 20, **gekennzeichnet durch** den weiteren Schritt des Zusammenfassens zusammenhängender, markierter Bildpunkte zu Objekten und Erstellen einer Objektliste mit die extrahierten Objekte beschreibenden Objektdaten.

22. Verfahren nach Anspruch 21, **gekennzeichnet durch** den weiteren Schritt des Zuordnens neuer Objekte aus den aktuellen Bilddaten zu den entsprechenden gespeicherten Objekten.

**Claims**

1. Image evaluation system for evaluating image data corresponding to an image region which is to be monitored and which is divided into image zones (A, B, C) of different predetermined signalling relevance, with:

an evaluating unit (10) for sending a message when a change in the position of an object is detected in the image region that is to be monitored, wherein the evaluating unit is suitable for sending the message depending on the signalling relevance of the object image zone before the change in position and the signalling relevance of the object image zone after the change in position.

2. Image evaluation system according to claim 1, further **characterised by** a reference image memory for storing the image data of an image as the reference image data and a differential image generating unit for comparing current image data with reference image data and for producing a differential image, in which are marked picture elements whose image data have changed.

3. Image evaluation system according to claim 2, further **characterised by** an object extraction unit (8) for combining contiguous marked differential picture elements into objects and for producing an object list with object data that describe the extracted objects.

4. System according to one of the claims 1 to 3, **characterised by** an input device (25) by means of which the image zones (A, B, C) can be predetermined.

5. System according to claim 4, **characterised in that** the image zones (A, B, C) can be defined on the basis of a polygonal course that circumscribes the corresponding image zone, wherein the coordinates of the polygonal course can be input by means of the input device (25).

6. System according to one of the preceding claims, **characterised in that** the image zones (A, B, C) comprise a detection zone (A), an alarm zone (B) and a priority zone (C).

7. System according to claim 6, **characterised in that** in order to increase detectability in a display of the image region that is to be monitored on a display device (14), the detection zone (A) can be shown in green, the alarm zone (B) in yellow and the priority zone (C) in red.

8. System according to claim 6, **characterised in that** in the event of a change in the object position within the detection zone (A), the evaluating unit (10) does not send a message.

9. System according to claim 6, **characterised in that** in the event of a change in the object position from the detection zone (A) into the alarm zone (B), the evaluating unit (10) sends a message.

10. System according to claim 6, **characterised in that** in the event of a change in the object position into the priority zone (C), the evaluating unit (10) sends a message.

11. System according to claim 6, **characterised in that** when a message is sent, the evaluating unit (10) takes account of the change in position of the object with reference to the different image zones (A, B, C) according to the table below, wherein A indicates the detection zone, B the alarm zone and C the priority zone:

| FROM | TO | MESSAGE SENT |
|------|-----|--------------|
| A | A | No |
| A | B | Yes |
| A | C | Yes |
| B | B | No |
| B | A | No |
| B | C | Yes |
| C | C | Yes |
| C | B | Yes |
| C | A | No |

12. System according to one of the claims 8 to 11, **characterised in that** the message is sent by the evaluating unit (10) only if all the other predetermined relevance criteria are fulfilled.

13. System according to one of the claims 8 to 12, **characterised in that** the evaluating unit (10) determines a multiple change of image zone on the basis of the coordinates of the first point of detection of an object that are stored in an object list.

14. System according to claim 13, **characterised in that** in the event of a change in the object position from the detection zone (A) into the alarm zone (B), the evaluating unit (10) does not send a message if the coordinates of the first point of detection of the object are located in the alarm zone (B).

15. System according to one of the preceding claims, **characterised in that** the evaluating unit (10) comprises a signal object checking unit (13), in which the coordinates of the predetermined image zones (A, B, C) are stored, wherein the signal object checking unit (13) establishes the change in object position on the basis of the object coordinates of an object extracted from the differential image in an object extractor (8), and the stored object coordinates of a stored object assigned in an object correlator (9).

16. System according to one of the preceding claims, **characterised in that** the evaluating unit (10) sends a message in the event of predetermined relevant features of the altered image data, wherein the evaluating unit (10) can be preset in such a way that the object parameter used as the criterion for relevance in the case of objects located in the preset image details is evaluated without taking account of the perspectivistic change in size.

17. System according to one of the preceding claims, **characterised in that** it comprises a preliminary evaluation unit (22) which alters the programming of an evaluating unit (10) used for sending a message in the event of predetermined relevant features of the altered image data, depending on predetermined features that depend on the environmental conditions in the image region.

18. System according to one of the preceding claims, **characterised by**

a) a contour circuit (15) for producing a contour image from the image data

b) a non-volatile memory (17) in which data from reference contour sections (K1, K2) of striking, non-changing image details are stored, and

c) a comparison unit (16) for comparing the data for the stored reference contour sections (K1, K2) with the image data, and for producing a warning signal (20) in the event that they do not agree.

19. Method for evaluating image data corresponding to an image region which is to be monitored and which is divided into image zones (A, B, C) of different predetermined signalling relevance, with the step of:

- Sending a message when a change is detected in the position of an object in the image region that is to be monitored, wherein the message is sent depending on the signalling relevance of the object image zone before the change in position and on the signalling relevance of the object image zone after the change in position.

20. Method according to claim 16, **characterised by** the additional steps:

- Division of an image region that is to be monitored into image zones of different predetermined signalling relevance;
- Storage of image data corresponding to the image region to be monitored as reference image data;
- Generation of a differential image by marking those picture elements whose image data have changed.

21. Method according to claim 20, **characterised by** the additional step of combining contiguous, marked picture elements into objects and the production of an object list with the object data that describe the extracted objects.

22. Method according to claim 21, **characterised by** the additional step of assigning new objects from the current image data to the corresponding stored objects.

## Revendications

1. Système d'évaluation d'images pour évaluer des données d'image correspondant à une région d'image à surveiller qui est divisée en zones d'image (A, B, C) présentant pour l'avertissement des importances prédéfinies différentes, avec :

un dispositif d'évaluation (10) destiné à émettre un avertissement au cas où on détecte un changement de position d'un objet dans la région d'image à surveiller, le dispositif d'évaluation étant apte à émettre l'avertissement en fonction de l'importance, pour l'avertissement, de la zone d'image d'objet avant le changement de position, et de l'importance, pour l'avertissement, de la zone d'image d'objet après le changement de position.

2. Système d'évaluation d'image selon la revendication 1, également **caractérisé par** une mémoire d'images de référence destinée à stocker les données d'une image comme données d'image de référence, et un dispositif générateur d'image différentielle destiné à comparer des données d'image du moment aux données d'image de référence, et à générer une image différentielle sur laquelle des points d'image dont les données d'image ont changé sont marqués.

3. Système d'évaluation d'image selon la revendication 2, également **caractérisé par** un dispositif d'extraction d'objet (8) destiné à réunir des points d'image différentielle marqués contigus pour former des objets, et à établir une liste d'objets avec les données d'objet décrivant les objets extraits.

4. Système selon l'une des revendications 1 à 3, **caractérisé par** un dispositif d'entrée (25) à l'aide duquel les zones d'image (A, B, C) peuvent être prédéfinies.

5. Système selon la revendication 4, **caractérisé en ce que** les zones d'image (A, B, C) sont aptes à être définies à l'aide d'un tracé polygonal délimitant la zone d'image correspondante, les coordonnées du tracé polygonal pouvant être entrées à l'aide du dispositif d'entrée (25).

6. Système selon l'une des revendications précédentes, **caractérisé en ce que** les zones d'image (A, B, C) comprennent une zone de détection (A), une zone d'alarme (B) et une zone de priorité (C).

**7.** Système selon la revendication 6, **caractérisé en ce que** pour augmenter la détectabilité, la zone de détection (A) peut être représentée en vert, la zone d'alarme (B) en jaune et la zone de priorité (C) en rouge, si la région d'image à surveiller est affichée au niveau d'un dispositif d'affichage (14).

**8.** Système selon la revendication 6, **caractérisé en ce que** le dispositif d'évaluation (10) n'émet pas d'avertissement si la position d'objet change à l'intérieur de la zone de détection (A).

**9.** Système selon la revendication 6, **caractérisé en ce que** le dispositif d'évaluation (10) émet un avertissement si la position d'objet passe de la zone de détection (A) à la zone d'alarme (B).

**10.** Système selon la revendication 6, **caractérisé en ce que** le dispositif d'évaluation (10) émet un avertissement si la position d'objet passe dans la zone prioritaire (C).

**11.** Système selon la revendication 6, **caractérisé en ce que** le dispositif d'évaluation (10), lors de l'émission d'un avertissement, tient compte du changement de la position d'objet par rapport aux différentes zones d'image (A, B, C) selon le tableau suivant, A désignant la zone de détection, B la zone d'alarme et C la zone de priorité :

| DE | VERS | EMISSION D'UN AVERTISSEMENT |
|----|------|------------------------------|
| A | A | Non |
| A | B | Oui |
| A | C | Oui |
| B | B | Non |
| B | A | Non |
| B | C | Oui |
| C | C | Oui |
| C | B | Oui |
| C | A | Non |

**12.** Système selon l'une des revendications 8 à 11, **caractérisé en ce que** l'émission d'un avertissement par le dispositif d'évaluation (10) ne se fait que si tous les autres critères d'importance prédéfinis sont satisfaits eux aussi.

**13.** Système selon l'une des revendications 8 à 12, **caractérisé en ce que** le dispositif d'évaluation (10) constate un changement multiple de zone d'image à l'aide des coordonnées, mises en mémoire dans une liste d'objets, du premier point de détection d'un objet.

**14.** Système selon la revendication 13, **caractérisé en ce que** le dispositif d'évaluation (10), lorsque la position d'objet passe de la position de détection (A) à la zone d'alarme (B), n'émet pas d'avertissement si les coordonnées du premier point de détection de l'objet se trouvent dans la zone d'alarme (B).

**15.** Système selon l'une des revendications précédentes, **caractérisé en ce que** le dispositif d'évaluation (10) comprend une unité de contrôle d'objet à signaler (13) dans laquelle sont mises en mémoire les coordonnées des zones d'image prédéfinies (A, B, C), ladite unité de contrôle (13) déterminant le changement de la position d'objet à l'aide des coordonnées d'un objet extrait de l'image différentielle dans un extracteur d'objet (8), et des coordonnées mises en mémoire d'un objet mis en mémoire et affecté dans un corrélateur d'objet (9).

**16.** Système selon l'une des revendications précédentes, **caractérisé en ce que** le dispositif d'évaluation (10) émet un avertissement en présence de caractéristiques importantes prédéfinies des données d'image modifiées, le dispositif d'évaluation (10) étant préréglable de telle sorte que la taille d'objet utilisée comme critère pour l'importance soit évaluée dans le cas d'objets situés dans des coupes d'image préréglées, sans prise en compte du changement de taille en perspective.

**17.** Système selon l'une des revendications précédentes, **caractérisé en ce qu'**il comprend un dispositif de pré-analyse (22) qui modifie la programmation d'un dispositif d'évaluation (10) utilisé pour émettre un avertissement en présence de caractéristiques importantes prédéfinies des données d'image modifiées, en fonction de caractéristiques prédéfinies qui dépendent des conditions environnantes dans la zone d'image.

**18.** Système selon l'une des revendications précédentes, **caractérisé par**

a) un circuit de contour (15) pour produire une image de contour à partir des données d'image,
b) une mémoire non volatile (17) dans laquelle sont mises en mémoire des données de parties de contour de référence (K1, K2) de coupes d'image marquantes, non modifiables, et
c) un comparateur (16) pour comparer les données des parties de contour de référence (K1, K2) mises en mémoire aux données d'image et pour produire un signal d'alarme (20) en l'absence de concordance.

**19.** Procédé pour évaluer des données d'image correspondant à une région d'image à surveiller qui est divisée en zones d'image (A, B, C) présentant pour l'avertissement des importances prédéfinies différentes, avec l'étape qui consiste :

à émettre un avertissement au cas où on détecte un changement de position d'un objet dans la région d'image à surveiller, ledit avertissement étant émis en fonction de l'importance, pour l'avertissement, de la zone d'image d'objet avant le changement de position, et de l'importance, pour l'avertissement, de la zone d'image d'objet après le changement de position.

**20.** Procédé selon la revendication 16, **caractérisé par** les étapes supplémentaires qui consistent :

à diviser une région d'image à surveiller en zones d'image présentant pour l'avertissement des importances prédéfinies différentes,
à mettre en mémoire comme données d'image de référence des données d'image correspondant à la région d'image à surveiller,
à produire une image différentielle grâce au marquage des points d'image dont les données d'image ont changé.

**21.** Procédé selon la revendication 20, **caractérisé par** l'étape supplémentaire qui consiste à réunir des points d'image marqués contigus pour former des objets, et à établir une liste d'objets avec des données d'objet décrivant les objets extraits.

**22.** Procédé selon la revendication 21, **caractérisé par** l'étape supplémentaire qui consiste à affecter des objets nouveaux provenant des données d'image du moment aux objets mis en mémoire correspondants.

Fig. 1

Fig. 2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3628816 C
- US 4249207 A